(19) Europäisches Patentamt
European Patent Office
Office européen des brevets

(11) EP 4 610 336 A1

(12) **EUROPEAN PATENT APPLICATION**
published in accordance with Art. 153(4) EPC

(43) Date of publication:
**03.09.2025 Bulletin 2025/36**

(21) Application number: **23882708.3**

(22) Date of filing: **26.10.2023**

(51) International Patent Classification (IPC):
***C10M 105/38*** *(2006.01)* ***C09K 5/04*** *(2006.01)*
***C10N 30/00*** *(2006.01)* ***C10N 30/08*** *(2006.01)*
***C10N 40/30*** *(2006.01)*

(52) Cooperative Patent Classification (CPC):
**C09K 5/04; C10M 105/38**

(86) International application number:
**PCT/JP2023/038629**

(87) International publication number:
**WO 2024/090504 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2022 JP 2022173755**

(71) Applicant: **Idemitsu Kosan Co.,Ltd.**
**Tokyo 100-8321 (JP)**

(72) Inventors:
- **KOJIMA, Akio**
  **Tokyo 100-8321 (JP)**
- **KISEN, Tadashi**
  **Tokyo 100-8321 (JP)**
- **YOSHIDA, Kohei**
  **Tokyo 100-8321 (JP)**
- **NAKAJIMA, So**
  **Tokyo 100-8321 (JP)**

(74) Representative: **Hoffmann Eitle**
**Patent- und Rechtsanwälte PartmbB**
**Arabellastraße 30**
**81925 München (DE)**

# (54) REFRIGERATOR OIL COMPOSITION AND MIXED COMPOSITION FOR REFRIGERATOR

(57) Provided is a refrigerator oil composition to be used in a refrigerant including a hydrocarbon refrigerant, the refrigerator oil composition including a polyol ester (P) of dipentaerythritol and one or more kinds of fatty acids (A) selected from fatty acids each having 2 to 23 carbon atoms. The polyol ester (P) satisfies the following requirements (α) and (β): ·Requirement (α): the fatty acids (A) satisfy the specific formula (α1); and ·Requirement (β): a content of a branched fatty acid in the fatty acids (A) is less than 80 mass% with respect to a total amount of the fatty acids (A).

EP 4 610 336 A1

## Description

### Technical Field

The present invention relates to a refrigerator oil composition and a mixed composition for a refrigerator.

The term "mixed composition for a refrigerator" as used herein refers to a composition obtained by mixing a "refrigerator oil composition" and a "refrigerant".

### Background Art

A refrigerator such as a compression-type refrigerator generally has a structure, which includes at least a compressor, a condenser, an expansion mechanism (e.g., an expansion valve), and an evaporator, and in which a mixed composition for a refrigerator circulates in a sealed system.

A fluorohydrocarbon compound having a low environmental load has started to be used as a refrigerant to be used in the refrigerator such as a compression-type refrigerator instead of a hydrochlorofluorocarbon (HCFC) that has heretofore been frequently used. Examples of the fluorohydrocarbon compound include saturated fluorohydrocarbon compounds (Hydro-Fluoro-Carbons; hereinafter also referred to as "HFCs"), such as 1,1,1,2-tetrafluoroethane (R134a), difluoromethane (R32), 1,1-difluoroethane (R152a), and a mixture of difluoromethane and pentafluoroethane (R410A).

In addition, the use of unsaturated fluorohydrocarbon compounds (Hydro-Fluoro-Olefins; hereinafter also referred to as "HFOs") each having a low global warming potential (GWP), such as 1,3,3,3-tetrafluoropropene (R1234ze), 2,3,3,3-tetrafluoropropene (R1234yf), and 1,2,3,3-tetrafluoropropene (R1234ye), has been investigated.

In recent years, the application of a hydrocarbon refrigerant such as propane (R290) has started to be investigated from the viewpoint of a further reduction in global warming potential (GWP) (see, for example, PTL 1).

### Citation List

### Patent Literature

PTL 1: JP 2004-043611 A

### Summary of Invention

### Technical Problem

In PTL 1, a refrigerator oil composition including an ether compound as a base oil has been investigated. However, no investigation has been made on a refrigerator oil composition including a polyol ester as a base oil.

In addition, the hydrocarbon refrigerant is strongly combustible. The usage amount of a hydrocarbon refrigerant is desirably reduced from the viewpoint of facilitating the securement of the safety. Accordingly, the refrigerator oil composition to be used at the time of the use of a hydrocarbon refrigerant is desirably suppressed in excessive dissolution of the hydrocarbon refrigerant by reducing the dissolution amount of the hydrocarbon refrigerant. Accordingly, the refrigerator oil composition to be used at the time of the use of a hydrocarbon refrigerant desirably has a low solubility of a hydrocarbon refrigerant.

In addition, the refrigerator oil composition is required to be excellent in low-temperature fluidity.

In PTL 1, however, no investigation has been made on the performance of the refrigerator oil composition including the polyol ester as a base oil.

An object of the present invention is to provide a refrigerator oil composition, which includes a polyol ester, has a low solubility of a hydrocarbon refrigerant, and is excellent in low-temperature fluidity, and a mixed composition for a refrigerator including the refrigerator oil composition.

### Solution to Problem

According to the present invention, there are provided the following items [1] to [3].

[1] A refrigerator oil composition to be used in a refrigerant including a hydrocarbon refrigerant, the refrigerator oil composition including a polyol ester (P) of dipentaerythritol and one or more kinds of fatty acids (A) selected from fatty acids each having 2 to 23 carbon atoms,
wherein the polyol ester (P) satisfies the following requirements ($\alpha$) and ($\beta$):

·Requirement ($\alpha$): the fatty acids (A) satisfy the following formula ($\alpha$1):

$$\sum(Xc\times WXc)+0.259\times\sum(Yc\times WYc)<6{,}000\cdots(\alpha1)$$

wherein Xc represents the number of carbon atoms of a linear saturated fatty acid in the fatty acids (A),

WXc represents a mass of the linear saturated fatty acid having Xc carbon atoms,
$\sum(Xc\times WXc)$ represents $Xc\times WXc$ when the number of kinds of the linear saturated fatty acids in the fatty acids (A) is one, and $\sum(Xc\times WXc)$ represents a total sum of the $Xc\times WXc$ of each linear saturated fatty acid when the number of the kinds of the linear saturated fatty acids in the fatty acids (A) is two or more,
Yc represents the number of carbon atoms of a linear unsaturated fatty acid in the fatty acids (A),
WYc represents a mass of the linear unsaturated fatty acid having Yc carbon atoms, and
$\Sigma(Yc\times WYc)$ represents $Yc\times WYc$ when the number of kinds of the linear unsaturated fatty acids in the fatty acids (A) is one, and $\Sigma(Yc\times WYc)$ represents a total sum of the $Yc\times WYc$ of each linear unsaturated fatty acid when the number of the kinds of the linear unsaturated fatty acids in the fatty acids (A) is two or more; and

·Requirement ($\beta$): a content of a branched fatty acid in the fatty acids (A) is less than 80 mass% with respect to a total amount of the fatty acids (A).

[2] A mixed composition for a refrigerator, including:

the refrigerator oil composition of the above-mentioned item [1]; and
a refrigerant including a hydrocarbon refrigerant.

[3] A method of producing a refrigerator oil composition to be used in a refrigerant including a hydrocarbon refrigerant, the method including a step of blending a polyol ester (P) of dipentaerythritol and one or more kinds of fatty acids (A) selected from fatty acids each having 2 to 23 carbon atoms,
wherein the polyol ester (P) satisfies the following requirements ($\alpha$) and ($\beta$):

·Requirement ($\alpha$): the fatty acids (A) satisfy the following formula ($\alpha$1):

$$\sum(Xc\times WXc)+0.259\times\sum(Yc\times WYc)<6{,}000\cdots(\alpha1)$$

wherein Xc represents the number of carbon atoms of a linear saturated fatty acid in the fatty acids (A),

WXc represents a mass of the linear saturated fatty acid having Xc carbon atoms,
$\sum(Xc\times WXc)$ represents $Xc\times WXc$ when the number of kinds of the linear saturated fatty acids in the fatty acids (A) is one, and $\sum(Xc\times WXc)$ represents a total sum of the $Xc\times WXc$ of each linear saturated fatty acid when the number of the kinds of the linear saturated fatty acids in the fatty acids (A) is two or more,
Yc represents the number of carbon atoms of a linear unsaturated fatty acid in the fatty acids (A),
WYc represents a mass of the linear unsaturated fatty acid having Yc carbon atoms, and
$\Sigma(Yc\times WYc)$ represents $Yc\times WYc$ when the number of kinds of the linear unsaturated fatty acids in the fatty acids (A) is one, and $\Sigma(Yc\times WYc)$ represents a total sum of the $Yc\times WYc$ of each linear unsaturated fatty acid when the number of the kinds of the linear unsaturated fatty acids in the fatty acids (A) is two or more; and

·Requirement ($\beta$): a content of a branched fatty acid in the fatty acids (A) is less than 80 mass% with respect to a total amount of the fatty acids (A).

Advantageous Effects of Invention

According to the present invention, the refrigerator oil composition, which includes a polyol ester, has a low solubility of a hydrocarbon refrigerant, and is excellent in low-temperature fluidity, and the mixed composition for a refrigerator including the refrigerator oil composition can be provided.

Brief Description of Drawings

[Fig. 1] Fig. 1 is a sectional view for illustrating a viscosity-measuring apparatus used in the measurement of a dissolution viscosity in Examples.

[Fig. 2] Fig. 2 is an enlarged sectional view for illustrating the main portion of the viscosity-measuring apparatus used in the measurement of the dissolution viscosity in Examples.

[Fig. 3] Fig. 3 is a sectional view for illustrating part of a procedure for measurement with the viscosity-measuring apparatus used in the measurement of the dissolution viscosity in Examples.

Description of Embodiments

The upper limit values and lower limit values of numerical ranges described herein may be arbitrarily combined. For example, when the range of "from A to B" and the range of "from C to D" are described as numerical ranges, the numerical range of "from A to D" and the numerical range of "from C to B" are also included in the scope of the present invention.

In addition, the numerical range of "from a lower limit value to an upper limit value" described herein means that a physical property value is the lower limit value or more and the upper limit value or less unless otherwise stated.

In addition, in this description, the numerical values of Examples are numerical values that may each be used as an upper limit value or a lower limit value.

In the following description, the term "solubility of a hydrocarbon refrigerant" means the solubility of the hydrocarbon refrigerant in a refrigerator oil composition including a polyol ester (P) or the polyol ester (P).

In addition, in the following description, the term "dissolution viscosity" means the viscosity of a mixed composition for a refrigerator at the time of the dissolution of the hydrocarbon refrigerant in the refrigerator oil composition including the polyol ester (P) or the polyol ester (P) unless otherwise stated.

[Aspect of Refrigerator Oil Composition of Embodiment of the Present Invention]

A refrigerator oil composition according to an embodiment of the present invention is a refrigerator oil composition to be used in a refrigerant including a hydrocarbon refrigerant, the refrigerator oil composition including a polyol ester (P) of dipentaerythritol and one or more kinds of fatty acids (A) selected from fatty acids each having 2 to 23 carbon atoms.

In addition, the polyol ester (P) satisfies the following requirements ($\alpha$) and ($\beta$):

·Requirement ($\alpha$): the fatty acids (A) satisfy the following formula ($\alpha$1):

$$\sum(Xc\times WXc)+0.259\times\sum(Yc\times WYc)<6{,}000\cdots(\alpha 1)$$

wherein Xc represents the number of carbon atoms of a linear saturated fatty acid in the fatty acids (A),

WXc represents a mass of the linear saturated fatty acid having Xc carbon atoms,
$\sum(Xc\times WXc)$ represents $Xc\times WXc$ when the number of kinds of the linear saturated fatty acids in the fatty acids (A) is one, and $\sum(Xc\times WXc)$ represents a total sum of the $Xc\times WXc$ of each linear saturated fatty acid when the number of the kinds of the linear saturated fatty acids in the fatty acids (A) is two or more,
Yc represents the number of carbon atoms of a linear unsaturated fatty acid in the fatty acids (A),
WYc represents a mass of the linear unsaturated fatty acid having Yc carbon atoms, and
$\Sigma(Yc\times WYc)$ represents $Yc\times WYc$ when the number of kinds of the linear unsaturated fatty acids in the fatty acids (A) is one, and $\Sigma(Yc\times WYc)$ represents a total sum of the $Yc\times WYc$ of each linear unsaturated fatty acid when the number of the kinds of the linear unsaturated fatty acids in the fatty acids (A) is two or more; and

·Requirement ($\beta$): a content of a branched fatty acid in the fatty acids (A) is less than 80 mass% with respect to a total amount of the fatty acids (A).

The inventors of the present invention have made extensive investigations with a view to solving the above-mentioned problems. As a result, the inventors have found that the solubility of the hydrocarbon refrigerant can be reduced and the low-temperature fluidity of the polyol ester (P) can be secured by controlling the configuration (structure and number of the carbon atoms) of the fatty acid (A) for the polyol ester (P) of dipentaerythritol and the fatty acid (A).

In view of the foregoing, the inventors of the present invention have advanced investigations from various viewpoints on the basis of a relationship between the "configuration of the fatty acid (A)" and the "solubility of the hydrocarbon refrigerant," and a relationship between the "configuration of the fatty acid (A)" and the "low-temperature

fluidity of the polyol ester (P)." As a result, the inventors have created parameters related to those relationships, and hence have completed the present invention.

The configuration of the refrigerator oil composition of this embodiment is described in detail below.

<Polyol Ester (P)>

In this embodiment, the polyol ester (P) is an ester of dipentaerythritol and the one or more kinds of fatty acids (A) selected from the fatty acids each having 2 to 23 carbon atoms.

In the refrigerator oil composition of this embodiment, the polyol ester (P) functions as a base oil.

Herein, although the refrigerator oil composition of this embodiment may include only the polyol ester (P), the composition may include any other component except the polyol ester (P) to the extent that the effects of the present invention are not impaired.

In the refrigerator oil composition of this embodiment, the content of the polyol ester (P) is preferably 20 mass% or more, more preferably 40 mass% or more, still more preferably 60 mass% or more, still further more preferably 80 mass% or more, yet still further more preferably 90 mass% or more, even more preferably 100 mass% with respect to the total amount (100 mass%) of the refrigerator oil composition. The content of the polyol ester (P) may be 100 mass% or less with respect to the total amount (100 mass%) of the refrigerator oil composition.

In addition, the polyol ester (P) may be a partial ester or a full ester. However, from, for example, the viewpoint of improving the stability of the polyol ester (P), the ester preferably includes the full ester.

In this embodiment, the content of the full ester in the polyol ester (P) is preferably from 50 mass% to 100 mass%, more preferably from 60 mass% to 100 mass%, still more preferably from 70 mass% to 100 mass%, still further more preferably from 80 mass% to 100 mass%, yet still further more preferably from 90 mass% to 100 mass%, even more preferably from 95 mass% to 100 mass%.

(Dipentaerythritol)

In this embodiment, dipentaerythritol is an alcohol component for forming the polyol ester (P), and is a compound represented by the following structural formula (1).

[Chem. 1]

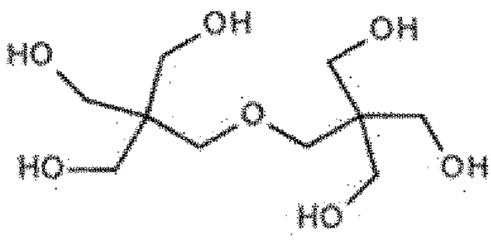

(1)

(Fatty Acid (A))

In this embodiment, the fatty acid (A) is an acid component for forming the polyol ester (P).

The fatty acid (A) is one or more kinds selected from the fatty acids each having 2 to 23 carbon atoms.

When the number of the carbon atoms of the fatty acid falls within the above-mentioned range, the effects of the present invention are easily exhibited. In addition, it becomes easier to obtain the fatty acid.

Herein, from the above-mentioned viewpoint, the number of the carbon atoms of the fatty acid is preferably from 2 to 22, more preferably from 2 to 20, still more preferably from 3 to 18.

The fatty acid (A) may be a linear saturated fatty acid, a linear unsaturated fatty acid, a branched saturated fatty acid, or a branched unsaturated fatty acid.

The fatty acids (A) may be used alone or in combination thereof.

<Requirement ($\alpha$)>

In the refrigerator oil composition of this embodiment, the polyol ester (P) satisfies the requirement ($\alpha$).

·Requirement ($\alpha$): The fatty acids (A) satisfy the following formula ($\alpha$1):

$$\sum(Xc\times WXc)+0.259\times\sum(Yc\times WYc)<6,000\cdots(\alpha1)$$

wherein Xc represents the number of carbon atoms of a linear saturated fatty acid in the fatty acids (A),

WXc represents a mass of the linear saturated fatty acid having Xc carbon atoms,
$\sum(Xc\times WXc)$ represents $Xc\times WXc$ when the number of kinds of the linear saturated fatty acids in the fatty acids (A) is one, and $\sum(Xc\times WXc)$ represents a total sum of the $Xc\times WXc$ of each linear saturated fatty acid when the number of the kinds of the linear saturated fatty acids in the fatty acids (A) is two or more,
Yc represents the number of carbon atoms of a linear unsaturated fatty acid in the fatty acids (A),
WYc represents a mass of the linear unsaturated fatty acid having Yc carbon atoms, and
$\Sigma(Yc\times WYc)$ represents $Yc\times WYc$ when the number of kinds of the linear unsaturated fatty acids in the fatty acids (A) is one, and $\Sigma(Yc\times WYc)$ represents a total sum of the $Yc\times WYc$ of each linear unsaturated fatty acid when the number of the kinds of the linear unsaturated fatty acids in the fatty acids (A) is two or more.

The value of the left-hand side of the formula ($\alpha$1) is a value calculated by setting the number of the moles of the fatty acid (A) to be bonded to 1 mole of dipentaerythritol to the maximum value. Accordingly, when the polyol ester (P) is a full ester, the value of the left-hand side of the formula ($\alpha$1) is a value calculated for 6 moles of the fatty acid (A).
The requirement ($\alpha$) is a parameter serving as an indicator of the low-temperature fluidity of the polyol ester (P).
The inventors of the present invention have ascertained that main factors that dominate the low-temperature fluidity of the polyol ester (P) are the number of the carbon atoms and amount of the linear saturated fatty acid in the fatty acid (A), and the number of the carbon atoms and amount of the linear unsaturated fatty acid therein. In addition, the inventors of the present invention have ascertained that the weights of the number of the carbon atoms and amount of the linear unsaturated fatty acid among those values are smaller than the weights of the number of the carbon atoms and amount of the linear saturated fatty acid. The inventors of the present invention have made various investigations through use of those matters as stepping stones, and hence have created the requirement ($\alpha$).
Herein, when the polyol ester (P) satisfies the requirement ($\alpha$), the pour point of the polyol ester (P) can be reduced, and hence the low-temperature fluidity of the refrigerator oil composition can be sufficiently secured.
Herein, from the viewpoint of reducing the pour point of the polyol ester (P) to make it easier to make the low-temperature fluidity of the refrigerator oil composition more excellent, the value of the right-hand side of the formula ($\alpha$1) is preferably 5,800, more preferably 5,600, still more preferably 5,400, still further more preferably 5,200.
From the viewpoint of reducing the pour point of the polyol ester (P), the value of the expression "$\Sigma(Xc\times WXc)+0.259\times\Sigma(Yc\times WYc)$" on the left-hand side of the formula ($\alpha$1) is desirably as small as possible, and its lower limit value is not particularly limited. However, the lower limit value is, for example, 2,000.
The requirement ($\alpha$) may be adjusted within a desired range by adjusting the number of the carbon atoms and amount of the linear saturated fatty acid for forming the fatty acid (A), and the number of the carbon atoms and amount of the linear unsaturated fatty acid for forming the acid, and by adjusting the amount of the branched fatty acid for forming the acid.

<Requirement ($\beta$)>

In the refrigerator oil composition of this embodiment, the polyol ester (P) satisfies the requirement ($\beta$).

·Requirement ($\beta$): A content of a branched fatty acid in the fatty acids (A) is less than 80 mass% with respect to a total amount of the fatty acids (A).

The requirement ($\beta$) is a parameter serving as an indicator of the solubility of the hydrocarbon refrigerant.
The inventors of the present invention have ascertained that a main factor that dominates the solubility of the hydrocarbon refrigerant is whether the amount of the branched fatty acid in the fatty acid (A) is large or small. The inventors of the present invention have made various investigations through use of the matter as a stepping stone, and hence have created the requirement ($\beta$).
Herein, when the polyol ester (P) satisfies the requirement ($\beta$), the solubility of the hydrocarbon refrigerant can be suppressed to a low level.
Herein, from the viewpoint of further facilitating the suppression of the solubility of the hydrocarbon refrigerant to a low level, the content of the branched fatty acid in the fatty acid (A) is preferably 75 mass% or less, more preferably 70 mass% or less, still more preferably 65 mass% or less, still further more preferably 60 mass% or less with respect to the total amount of the fatty acid (A).
When the content of the branched fatty acid in the fatty acid (A) is reduced to a larger extent, the solubility of the

hydrocarbon refrigerant can be suppressed to a lower level. Accordingly, the content of the branched fatty acid in the fatty acid (A) may be 0 mass% with respect to the total amount of the fatty acid (A).

The requirement (β) may be adjusted within a desired range by adjusting the amount of the branched fatty acid for forming the fatty acid (A).

<Requirement (γ)>

**In** the refrigerator oil composition of this embodiment, the polyol ester (P) preferably further satisfies the requirement (γ).

·Requirement (γ): The fatty acids (A) satisfy the following formula (γ1):

$$\sum(Zc \times WZc) > 2{,}500 \cdots (\gamma 1)$$

wherein Zc represents the number of carbon atoms of a linear fatty acid in the fatty acids (A),

WZc represents a mass of the linear fatty acid having Zc carbon atoms, and
Σ(Zc×WZc) represents Zc×WZc when the number of kinds of the linear fatty acids in the fatty acids (A) is one, and
Σ(Zc×WZc) represents a total sum of the Zc×WZc of each linear fatty acid when the number of the kinds of the linear fatty acids in the fatty acids (A) is two or more.

The value of the left-hand side of the formula (γ1) is a value calculated by setting the number of the moles of the fatty acid (A) to be bonded to 1 mole of dipentaerythritol to the maximum value. Accordingly, when the polyol ester (P) is a full ester, the value of the left-hand side of the formula (γ1) is a value calculated for 6 moles of the fatty acid (A).

The hydrocarbon refrigerant is more liable to reduce the viscosity (dissolution viscosity) of a mixed composition for a refrigerator, which is obtained by dissolving the refrigerant in the refrigerator oil composition, than a HFC refrigerant or a HFO refrigerant is. The reduction in dissolution viscosity deteriorates lubricity in the sliding portion of, for example, the compressor of a refrigerator to be responsible for the advance of wear. Accordingly, the refrigerator oil composition to be used at the time of the use of the hydrocarbon refrigerant is required to have an appropriate dissolution viscosity so that satisfactory lubricity may be exhibited even when the hydrocarbon refrigerant is dissolved.

The requirement (γ) is a parameter serving as an indicator of the dissolution viscosity, and when the polyol ester (P) satisfies the requirement (γ), the suppression of a reduction in dissolution viscosity can be facilitated.

The inventors of the present invention have ascertained that a main factor that dominates the dissolution viscosity is whether the amount of the linear fatty acid in the fatty acid (A) is large or small. The inventors of the present invention have made various investigations through use of the matter as a stepping stone, and hence have created the requirement (γ).

An improvement in low-temperature fluidity by a reduction in pour point of a polyol ester compound and the suppression of a reduction in dissolution viscosity are in a trade-off relationship, and hence it is difficult to achieve both of the improvement and the suppression. In this respect, according to this embodiment, the satisfaction of the requirement (β) and the requirement (γ) can achieve both of those kinds of performance in a balanced manner. In addition, the satisfaction of the requirement (α), the requirement (β), and the requirement (γ) can suppress the solubility of the hydrocarbon refrigerant to a low level while achieving both of those kinds of performance in a balanced manner.

Herein, from the viewpoint of further facilitating the suppression of a reduction in dissolution viscosity, the value of the right-hand side of the formula (γ1) is preferably 2,700, more preferably 2,900, still more preferably 3,000.

From the viewpoint of further facilitating the suppression of the reduction in dissolution viscosity, the value of the left-hand side "∑(Zc×WZc)" of the formula (γ1) is desirably as large as possible. However, from the viewpoint of suppressing an increase in pour point of the polyol ester (P), the value is preferably 20,000 or less.

The requirement (γ) may be adjusted within a desired range by adjusting the number of the carbon atoms and amount of the linear fatty acid for forming the fatty acid (A), and by adjusting the amount of the branched fatty acid for forming the acid.

<Preferred Aspect of Fatty Acid (A)>

The fatty acid (A) is appropriately adjusted so as to satisfy the requirement (α) and the requirement (β).

Alternatively, the fatty acid (A) is appropriately adjusted so as to satisfy the requirement (α) and the requirement (β), and the requirement (γ).

Specifically, the requirement (α) and the requirement (β) can be satisfied as follows: while the number of the

carbon atoms and amount of the linear saturated fatty acid, and the number of the carbon atoms and amount of the linear unsaturated fatty acid are adjusted so that the requirement (α) may be satisfied, the amount of the branched fatty acid is adjusted so that the requirement (β) may be satisfied.

**In** addition, the requirement (α), the requirement (β), and the requirement (γ) can be satisfied as follows: while the number of the carbon atoms and amount of the linear saturated fatty acid, and the number of the carbon atoms and amount of the linear unsaturated fatty acid are adjusted so that the requirement (α) may be satisfied, the amount of the branched fatty acid is adjusted so that the requirement (β) may be satisfied; and the number of the carbon atoms and amount of the linear fatty acid are adjusted so that the requirement (γ) may be satisfied.

The fatty acid (A) may be a linear saturated fatty acid, a linear unsaturated fatty acid, a branched saturated fatty acid, or a branched unsaturated fatty acid. Accordingly, the fatty acid (A) may be one or more kinds selected from a linear saturated fatty acid, a linear unsaturated fatty acid, a branched saturated fatty acid, and a branched unsaturated fatty acid.

Specifically, the fatty acid (A) may be one or more kinds selected from the group consisting of the following (1), (2), (3), and (4):

(1) one or more kinds selected from linear saturated fatty acids;
(2) one or more kinds selected from linear unsaturated fatty acids;
(3) one or more kinds selected from branched saturated fatty acids; and
(4) one or more kinds selected from branched unsaturated fatty acids.

Herein, from the viewpoint of, for example, ease of availability, the fatty acid (A) is preferably one or more kinds selected from a linear saturated fatty acid, a linear unsaturated fatty acid, and a branched saturated fatty acid.

Specifically, the fatty acid (A) is preferably one or more kinds selected from the group consisting of the following (1), (2), and (3):

(1) one or more kinds selected from linear saturated fatty acids;
(2) one or more kinds selected from linear unsaturated fatty acids; and
(3) one or more kinds selected from branched saturated fatty acids.

Specific examples of the linear saturated fatty acid include acetic acid, propanoic acid, n-butanoic acid, n-pentanoic acid, n-hexanoic acid, n-heptanoic acid, n-octanoic acid, *n*-nonanoic acid, n-decanoic acid, n-undecanoic acid, n-dodecanoic acid, n-tridecanoic acid, *n*-tetradecanoic acid, n-pentadecanoic acid, n-hexadecanoic acid, n-heptadecanoic acid, *n*-octadecanoic acid, n-nonadecanoic acid, n-icosanoic acid, n-henicosanoic acid, n-docosanoic acid, and n-tricosanoic acid.

Those linear saturated fatty acids may be used alone or in combination thereof.

Specific examples of the linear unsaturated fatty acid include hexadecenoic acid, octadecenoic acid (oleic acid), octadecadienoic acid, octadecanetrienoic acid, eicosadienoic acid, eicosatrienoic acid, erucic acid (docosenoic acid), and eicosatetraenoic acid.

Those linear unsaturated fatty acids may be used alone or in combination thereof.

Although the number of the unsaturated bonds of the linear unsaturated fatty acid may be one or two or more, the number of the unsaturated bonds is preferably one from, for example, the viewpoint of ease of availability.

Specific examples of the branched saturated fatty acid include 2-methylpropanoic acid, 3-methylbutanoic acid, pivalic acid, isoheptanoic acid, 4-ethylpentanoic acid, isooctylic acid, 2-ethylhexanoic acid, 4,5-dimethylhexanoic acid, 4-propylpentanoic acid, isononanoic acid, 2-ethylheptanoic acid, 3,5,5-trimethylhexanoic acid, isodecanoic acid, isododecanoic acid, 2-methyldecanoic acid, 3-methyldecanoic acid, 4-methyldecanoic acid, 5-methyldecanoic acid, 6-methyldecanoic acid, 7-methyldecanoic acid, 9-methyldecanoic acid, 6-ethylnonanoic acid, 5-propyloctanoic acid, isolauric acid, 3-methylhendecanoic acid, 6-propylnonanoic acid, isotridecanoic acid, 2-methyldodecanoic acid, 3-methyldodecanoic acid, 4-methyldodecanoic acid, 5-methyldodecanoic acid, 11-methyldodecanoic acid, 7-propyldecanoic acid, isomyristic acid, 2-methyltridecanoic acid, 12-methyltridecanoic acid, isopalmitic acid, 2-hexyldecanoic acid, 14-methylpentadecanoic acid, 2-ethyltetradecanoic acid, isostearic acid, methyl-branched isostearic acid, 2-heptylundecanoic acid, 2-isoheptylisoundecanoic acid, 2-ethylhexadecanoic acid, 14-ethylhexadecanoic acid, 14-methylheptadecanoic acid, 15-methylheptadecanoic acid, 16-methylheptadecanoic acid, 2-butyltetradecanoic acid, isoarachic acid, 3-methylnonadecanoic acid, and 2-ethyloctadecanoic acid.

**In** this embodiment, from the viewpoint of facilitating the satisfaction of the requirement (α) and the requirement (β), and the viewpoint of facilitating the satisfaction of the requirement (α), the requirement (β), and the requirement (γ), the fatty acid (A) preferably satisfies, for example, the following requirements:

(Requirement 1) the fatty acid (A) includes a linear short-chain fatty acid (A1) having 2 to 12 carbon atoms;
(Requirement 2) the content of the linear short-chain fatty acid (A1) is 15 mol% or more with respect to the total amount

of the fatty acid (A);
(Requirement 3) the content of a branched fatty acid (A2) is 60 mol% or less with respect to the total amount of the fatty acid (A); and
(Requirement 4) when the content of the branched fatty acid (A2) is small (e.g., when the content is 10 mol% or less with respect to the total amount of the fatty acid (A)), the linear short-chain fatty acid (A1) includes a linear short-chain fatty acid (A11) having 2 to 8 carbon atoms, and the content of the linear short-chain fatty acid (A11) is more than 50 mol% with respect to the total amount of the fatty acid (A).

The following aspects may be excluded from the fatty acid (A):

·a fatty acid formed of 55 mol% of propionic acid and 45 mol% of oleic acid; and
·a fatty acid formed of 55 mol% of n-hexanoic acid and 45 mol% of oleic acid.

**In** addition, in another embodiment (1) of the present invention, a refrigerator oil composition is a refrigerator oil composition to be used in a refrigerant including a hydrocarbon refrigerant, the refrigerator oil composition including a polyol ester (P) of dipentaerythritol and one or more kinds of fatty acids (A) selected from fatty acids each having 2 to 23 carbon atoms,
in which the polyol ester (P) satisfies the following requirement (β):

·Requirement (β): the content of a branched fatty acid in the fatty acids (A) is less than 80 mass% with respect to the total amount of the fatty acids (A).

As described above, when the polyol ester (P) satisfies the requirement (β), the solubility of the hydrocarbon refrigerant can be suppressed to a low level.
Preferred aspects of the polyol ester (P) and the fatty acids (A) in the other embodiment (1) are as described above.
In addition, in another embodiment (2) of the present invention, a refrigerator oil composition is a refrigerator oil composition to be used in a refrigerant including a hydrocarbon refrigerant, the refrigerator oil composition including a polyol ester (P) of dipentaerythritol and one or more kinds of fatty acids (A) selected from fatty acids each having 2 to 23 carbon atoms,
in which the polyol ester (P) satisfies the following requirement (β) and requirement (γ):

·Requirement (β): the content of a branched fatty acid in the fatty acids (A) is less than 80 mass% with respect to the total amount of the fatty acids (A); and
·Requirement (γ): the fatty acids (A) satisfy the following formula (γ1):

$$\sum(Zc \times WZc) > 2{,}500 \cdots (\gamma 1)$$

wherein Zc represents the number of the carbon atoms of a linear fatty acid in the fatty acids (A),

WZc represents the mass of the linear fatty acid having Zc carbon atoms, and
Σ(Zc×WZc) represents Zc×WZc when the number of the kinds of the linear fatty acids in the fatty acids (A) is one, and Σ(Zc×WZc) represents the total sum of the Zc×WZc of each linear fatty acid when the number of the kinds of the linear fatty acids in the fatty acids (A) is two or more.

As described above, the requirement (γ) is a parameter serving as an indicator of the dissolution viscosity of the composition, and when the polyol ester (P) satisfies the requirement (γ), the suppression of a reduction in dissolution viscosity can be facilitated.
Preferred aspects of the polyol ester (P) and the fatty acids (A) in the other embodiment (2) are as described above.

<Other Base Oil except Polyol Ester (P)>

The refrigerator oil composition of this embodiment may further include any other base oil except the polyol ester (P), or may be free of the base oil.
The other base oil except the polyol ester (P) is, for example, one or more kinds selected from the group consisting of: a mineral oil; and a synthetic oil that does not correspond to the polyol ester (P).

Examples of the mineral oil include: a normal-pressure residual oil obtained by distilling a crude oil, such as a paraffin-based crude oil, an intermediate base crude oil, or a naphthene-based crude oil, under normal pressure; a distillate oil obtained by distilling such normal-pressure residual oil under reduced pressure; a mineral oil obtained by subjecting the distillate oil to one or more kinds of treatment, such as solvent deasphalting, solvent extraction, hydrocracking, solvent dewaxing, catalytic dewaxing, and hydrorefining; and a wax isomerized mineral oil.

The mineral oils may be used alone or in combination thereof.

Examples of the synthetic oil that does not correspond to the polyol ester (P) include: a polyvinyl ether; a polyalkylene glycol; a copolymer of a polyalkylene glycol or a monoether thereof, and polyvinyl ether; a polyol ester that does not correspond to the polyol ester (P); a polyester; a polycarbonate; a hydrogenated product of an $\alpha$-olefin oligomer; an alicyclic hydrocarbon compound; an alkylated aromatic hydrocarbon compound; and a GTL base oil produced by isomerizing a gas-to-liquid wax (GTL wax) produced by the Fischer-Tropsch process or the like.

The synthetic oils may be used alone or in combination thereof.

From the viewpoint of further facilitating the exhibition of the effects of the present invention, the content of the mineral oil is preferably as small as possible. Specifically, the content of the mineral oil is preferably less than 10 parts by mass, more preferably less than 1 part by mass, still more preferably less than 0.1 part by mass with respect to 100 parts by mass of the polyol ester (P). It is still further more preferred that the refrigerator oil composition be free of the mineral oil.

In addition, from the same viewpoint, the content of the synthetic oil that does not correspond to the polyol ester (P) is preferably as small as possible. Specifically, the content of the synthetic oil that does not correspond to the polyol ester (P) is preferably less than 400 parts by mass, more preferably less than 200 parts by mass, still more preferably less than 100 parts by mass, still further more preferably less than 50 parts by mass, yet still further more preferably less than 10 parts by mass with respect to 100 parts by mass of the polyol ester (P). It is even more preferred that the composition be free of the synthetic oil that does not correspond to the polyol ester (P).

<Physical Properties of Polyol Ester (P)>

(Kinematic Viscosity of Polyol Ester (P))

The kinematic viscosity of the polyol ester (P) at 40°C is preferably 20 $mm^2/s$ or more, more preferably 30 $mm^2/s$ or more, still more preferably 40 $mm^2/s$ or more. In addition, from the viewpoint of oil return, the viscosity is preferably 350 $mm^2/s$ or less, more preferably 320 $mm^2/s$ or less, still more preferably 300 $mm^2/s$ or less.

The upper limit values and lower limit values of those numerical ranges may be arbitrarily combined. Specifically, the viscosity is preferably from 20 $mm^2/s$ to 350 $mm^2/s$, more preferably from 30 $mm^2/s$ to 320 $mm^2/s$, still more preferably from 40 $mm^2/s$ to 300 $mm^2/s$.

From the viewpoint of suppressing wear in the sliding portion of, for example, the compressor of a refrigerator, the kinematic viscosity of the polyol ester (P) at 100°C is preferably 4 $mm^2/s$ or more, more preferably 6 $mm^2/s$ or more, still more preferably 8 $mm^2/s$ or more. In addition, from the viewpoint of oil return, the viscosity is preferably 70 $mm^2/s$ or less, more preferably 60 $mm^2/s$ or less, still more preferably 50 $mm^2/s$ or less.

The upper limit values and lower limit values of those numerical ranges may be arbitrarily combined. Specifically, the viscosity is preferably from 4 $mm^2/s$ to 70 $mm^2/s$, more preferably from 6 $mm^2/s$ to 60 $mm^2/s$, still more preferably from 8 $mm^2/s$ to 50 $mm^2/s$.

In this description, the kinematic viscosity of the refrigerator oil composition means a value measured in conformity with JIS K2283:2000.

(Solubility of Hydrocarbon Refrigerant)

From the viewpoint of suppressing the usage amount of the hydrocarbon refrigerant to facilitate the securement of safety, the solubility of the hydrocarbon refrigerant in the polyol ester (P), which is measured by a method described in Examples to be described later, is preferably less than 17.0 mass%, more preferably 16.5 mass% or less, still more preferably 16.0 mass% or less. In addition, the solubility is preferably 1 mass% or more.

(Pour Point of Polyol Ester (P))

From the viewpoint of making the low-temperature fluidity of the refrigerator oil composition excellent, the pour point of the polyol ester (P) measured by a method described in Examples to be described later is preferably -20°C or less, more preferably -30°C or less, still more preferably -40°C or less, still further more preferably -50°C or less.

(Dissolution Viscosity)

From the viewpoint of suppressing wear in the sliding portion of, for example, the compressor of a refrigerator, the dissolution viscosity of the polyol ester (P) having dissolved therein the hydrocarbon refrigerant, which is measured by a method described in Examples to be described later, is preferably 2.500 $mm^2/s$ or more, more preferably 2.700 $mm^2/s$ or more, still more preferably 2.800 $mm^2/s$ or more, still further more preferably 2.900 $mm^2/s$ or more, yet still further more preferably 3.000 $mm^2/s$ or more. **In** addition, the viscosity is preferably 50.00 $mm^2/s$ or less.

<Additive>

The refrigerator oil composition of this embodiment may further include an additive to the extent that the effects of the present invention are not impaired, or the composition may be free of the additive.
The additive is, for example, an additive that may be generally blended into a refrigerator oil composition.
Such additive is, for example, one or more kinds selected from the group consisting of: an antioxidant; an oxygen scavenger; an acid scavenger; an extreme-pressure agent; an oiliness agent; a metal deactivator; and an antifoaming agent.
The total content of such additive is preferably from 0 mass% to 10 mass%, more preferably from 0.01 mass% to 5 mass%, still more preferably from 0.1 mass% to 3 mass% with respect to the total amount (100 mass%) of the refrigerator oil composition.

(Antioxidant)

Examples of the antioxidant include: phenol-based antioxidants, such as *2,6*-di-*tert*-butyl-4-methylphenol, 2,6-di-*tert*-butyl-4-ethylphenol, and 2,2'-methylenebis(4-methyl-6-tertbutylphenol); and amine-based antioxidants, such as phenyl-α-naphthylamine and *N,N'*-diphenyl-p-phenylenediamine.
The antioxidants may be used alone or in combination thereof.

(Oxygen Scavenger)

Examples of the oxygen scavenger include an aliphatic unsaturated compound and a terpene having a double bond.
The above-mentioned aliphatic unsaturated compound is preferably an unsaturated hydrocarbon, and specific examples thereof include: an olefin; and a polyene, such as a diene or a triene. The olefin is preferably an α-olefin, such as 1-tetradecene, 1-hexadecene, or 1-octadecene, from the viewpoint of reactivity with oxygen.
An aliphatic unsaturated compound except the foregoing is preferably an unsaturated aliphatic alcohol having a conjugated double bond such as vitamin A ((2E,4E,6E,8E)-3,7-dimethyl-9-(2,6,6-trimethylcyclohexen-1-yl)nona-2,4,6,8-tetraen-1-ol) represented by the molecular formula $C_{20}H_{30}O$ from the viewpoint of reactivity with oxygen.
The terpene having a double bond is preferably a terpene-based hydrocarbon having a double bond, and is more preferably α-farnesene ($C_{15}H_{24}$: 3,7,11-trimethyldodeca-1,3,6,10-tetraene) or β-farnesene ($C_{15}H_{24}$: 7,11-dimethyl-3-methylidenedodeca-1,6,10-triene) from the viewpoint of reactivity with oxygen.
The oxygen scavengers may be used alone or in combination thereof.

(Acid Scavenger)

Examples of the acid scavenger may include epoxy compounds, such as phenyl glycidyl ether, an alkyl glycidyl ether, an alkylene glycol glycidyl ether, cyclohexene oxide, an α-olefin oxide, and epoxidized soybean oil. However, at least one kind selected from a glycidyl ester, a glycidyl ether, and an α-olefin oxide is particularly suitably used as the acid scavenger.
The glycidyl ether is, for example, a glycidyl ether derived from a linear, branched, or cyclic, saturated or unsaturated, aliphatic monoalcohol or polyhydric alcohol having typically 3 to 30, preferably 4 to 24, more preferably 6 to 16 carbon atoms, or from an aromatic compound containing one or more hydroxy groups. In the case of an aliphatic polyhydric alcohol or an aromatic compound containing two or more hydroxy groups, all the hydroxy groups are preferably subjected to glycidyl etherification from the viewpoint of suppressing an increase in hydroxyl value for the stability of a lubricating oil composition.
Among them, a glycidyl ether derived from a linear, branched, or cyclic, saturated, aliphatic monoalcohol having 6 to 16 carbon atoms is particularly preferred. Examples of such glycidyl ether include 2-ethylhexyl glycidyl ether, isononyl glycidyl ether, caprinoyl glycidyl ether, lauryl glycidyl ether, and myristyl glycidyl ether.
Meanwhile, an α-olefin oxide having generally 4 to 50, preferably 4 to 24, more preferably 6 to 16 carbon atoms is

used as the $\alpha$-olefin oxide.

The acid scavengers may be used alone or in combination thereof.

(Extreme-pressure Agent)

Examples of the extreme-pressure agent may include phosphorus-based extreme-pressure agents, such as a phosphoric acid ester, an acid phosphoric acid ester, a phosphorous acid ester, an acid phosphorous acid ester, and an amine salt thereof.

Among those phosphorus-based extreme-pressure agents, tricresyl phosphate, trithiophenyl phosphate, tri(nonylphenyl) phosphite, dioleyl hydrogen phosphite, and 2-ethylhexyl diphenyl phosphite, and the like are particularly preferred from the viewpoints of, for example, an extreme-pressure property or a friction characteristic.

In addition, the extreme-pressure agent is, for example, a metal salt of a carboxylic acid. The term "metal salt of a carboxylic acid" as used herein refers to a metal salt of preferably a carboxylic acid having 3 to 60 carbon atoms, more preferably a carboxylic acid having 3 to 30 carbon atoms, particularly preferably a fatty acid having 12 to 30 carbon atoms. The examples may also include metal salts of a dimer acid and a trimer acid of the fatty acid, and a dicarboxylic acid having 3 to 30 carbon atoms. Among them, metal salts of a fatty acid having 12 to 30 carbon atoms and a dicarboxylic acid having 3 to 30 carbon atoms are particularly preferred.

Meanwhile, a metal for forming the metal salt is preferably an alkali metal or an alkaline earth metal, particularly optimally an alkali metal.

In addition, examples of the extreme-pressure agent may further include, as extreme-pressure agents except the foregoing, sulfur-based extreme-pressure agents, such as a sulfurized oil and fat, a sulfurized fatty acid, a sulfurized ester, a sulfurized olefin, dihydrocarvyl polysulfide, a thiocarbamate, a thioterpene, and a dialkyl thiodipropionate.

The extreme-pressure agents may be used alone or in combination thereof.

(Oiliness Agent)

Examples of the oiliness agent include: aliphatic saturated and unsaturated monocarboxylic acids, such as stearic acid and oleic acid; polymerized fatty acids, such as a dimer acid and a hydrogenated dimer acid; hydroxy fatty acids, such as ricinoleic acid and 12-hydroxystearic acid; aliphatic saturated and unsaturated monoalcohols, such as lauryl alcohol and oleyl alcohol; aliphatic saturated and unsaturated monoamines, such as stearylamine and oleylamine; aliphatic saturated and unsaturated monocarboxylic acid amides, such as lauric acid amide and oleic acid amide; and partial esters of polyhydric alcohols, such as glycerin and sorbitol, and aliphatic saturated or unsaturated monocarboxylic acids.

The oiliness agents may be used alone or in combination thereof.

(Metal Deactivator)

The metal deactivator is, for example, a copper deactivator such as *N*-[*N,N'*-dialkyl(alkyl groups each having 3 to 12 carbon atoms)aminomethyl]triazole.

The metal deactivators may be used alone or in combination thereof.

(Antifoaming Agent)

Examples of the antifoaming agent include a silicone oil and a fluorinated silicone oil.

The antifoaming agents may be used alone or in combination thereof.

[Method of producing Refrigerator Oil Composition]

A method of producing a refrigerator oil composition according to an embodiment of the present invention is not particularly limited.

For example, the method of producing a refrigerator oil composition of this embodiment is a method of producing a refrigerator oil composition to be used in a refrigerant including a hydrocarbon refrigerant, the method including a step of blending a polyol ester (P) of dipentaerythritol and one or more kinds of fatty acids (A) selected from fatty acids each having 2 to 23 carbon atoms.

In addition, the ester satisfies the following requirements ($\alpha$) and ($\beta$):

·Requirement ($\alpha$): the fatty acids (A) satisfy the following formula ($\alpha$1):

$$\sum(Xc \times WXc) + 0.259 \times \sum(Yc \times WYc) < 6,000 \cdots (\alpha 1)$$

wherein Xc represents the number of carbon atoms of a linear saturated fatty acid in the fatty acids (A),

WXc represents a mass of the linear saturated fatty acid having Xc carbon atoms,
$\sum(Xc \times WXc)$ represents $Xc \times WXc$ when the number of kinds of the linear saturated fatty acids in the fatty acids (A) is one, and $\sum(Xc \times WXc)$ represents a total sum of the $Xc \times WXc$ of each linear saturated fatty acid when the number of the kinds of the linear saturated fatty acids in the fatty acids (A) is two or more,
Yc represents the number of carbon atoms of a linear unsaturated fatty acid in the fatty acids (A),
WYc represents a mass of the linear unsaturated fatty acid having Yc carbon atoms, and
$\Sigma(Yc \times WYc)$ represents $Yc \times WYc$ when the number of kinds of the linear unsaturated fatty acids in the fatty acids (A) is one, and $\Sigma(Yc \times WYc)$ represents a total sum of the $Yc \times WYc$ of each linear unsaturated fatty acid when the number of the kinds of the linear unsaturated fatty acids in the fatty acids (A) is two or more; and

·Requirement ($\beta$): a content of a branched fatty acid in the fatty acids (A) is less than 80 mass% with respect to a total amount of the fatty acids (A).

The method of producing a refrigerator oil composition of this embodiment may further include a step of mixing the polyol ester (P) with any other base oil except the polyol ester (P) and a step of adding the above-mentioned additive, or may be free of the steps.
When the above-mentioned additive is blended into the polyol ester (P), the above-mentioned additive may be blended after having been brought into the form of a solution (dispersion) through the addition of a diluting oil or the like.
Preferred aspects of the fatty acids (A) are as described above.
Preferred aspects of the requirement ($\alpha$) and the requirement ($\beta$) are also as described above.
In the method of producing a refrigerator oil composition of this embodiment, the refrigerator oil composition may of course be produced so that the requirement ($\gamma$) may be further satisfied.

[Physical Properties of Refrigerator Oil Composition]

<Kinematic Viscosity of Refrigerator Oil Composition>

The kinematic viscosity of the refrigerator oil composition at 40°C is preferably 20 $mm^2/s$ or more, more preferably 30 $mm^2/s$ or more, still more preferably 40 $mm^2/s$ or more. In addition, from the viewpoint of oil return, the viscosity is preferably 350 $mm^2/s$ or less, more preferably 320 $mm^2/s$ or less, still more preferably 300 $mm^2/s$ or less.
The upper limit values and lower limit values of those numerical ranges may be arbitrarily combined. Specifically, the viscosity is preferably from 20 $mm^2/s$ to 350 $mm^2/s$, more preferably from 30 $mm^2/s$ to 320 $mm^2/s$, still more preferably from 40 $mm^2/s$ to 300 $mm^2/s$.
From the viewpoint of suppressing wear in the sliding portion of, for example, the compressor of a refrigerator, the kinematic viscosity of the refrigerator oil composition at 100°C is preferably 4 $mm^2/s$ or more, more preferably 6 $mm^2/s$ or more, still more preferably 8 $mm^2/s$ or more. In addition, from the viewpoint of oil return, the viscosity is preferably 70 $mm^2/s$ or less, more preferably 60 $mm^2/s$ or less, still more preferably 50 $mm^2/s$ or less.
The upper limit values and lower limit values of those numerical ranges may be arbitrarily combined. Specifically, the viscosity is preferably from 4 $mm^2/s$ to 70 $mm^2/s$, more preferably from 6 $mm^2/s$ to 60 $mm^2/s$, still more preferably from 8 $mm^2/s$ to 50 $mm^2/s$.
In this description, the kinematic viscosity of the refrigerator oil composition means a value measured in conformity with JIS K2283:2000.

<Solubility of Hydrocarbon Refrigerant>

From the viewpoint of suppressing the usage amount of the hydrocarbon refrigerant to facilitate the securement of safety, the solubility of the hydrocarbon refrigerant in the refrigerator oil composition, which is measured by a method described in Examples to be described later, is preferably less than 17.0 mass%, more preferably 16.5 mass% or less, still more preferably 16.0 mass% or less. In addition, the solubility is preferably 1 mass% or more.

<Pour Point of Refrigerator Oil Composition>

From the viewpoint of making the low-temperature fluidity of the refrigerator oil composition excellent, the pour

point of the refrigerator oil composition measured by a method described in Examples to be described later is preferably -20°C or less, more preferably -30°C or less, still more preferably -40°C or less, still further more preferably - 50°C or less.

<Dissolution Viscosity>

From the viewpoint of suppressing wear in the sliding portion of, for example, the compressor of a refrigerator, the dissolution viscosity of the refrigerator oil composition (mixed composition for a refrigerator) having dissolved therein the hydrocarbon refrigerant, which is measured by a method described in Examples to be described later, is preferably 2.500 $mm^2/s$ or more, more preferably 2.700 $mm^2/s$ or more, still more preferably 2.800 $mm^2/s$ or more, still further more preferably 2.900 $mm^2/s$ or more, yet still further more preferably 3.000 $mm^2/s$ or more. In addition, the viscosity is preferably 50.00 $mm^2/s$ or less.

[Mixed Composition for Refrigerator]

The above-mentioned refrigerator oil composition is used as a mixed composition for a refrigerator by being mixed with a refrigerant.

That is, the mixed composition for a refrigerator includes the above-mentioned refrigerator oil composition and a refrigerant including a hydrocarbon refrigerant.

The refrigerant is described below.

<Refrigerant>

(Hydrocarbon Refrigerant)

The refrigerant to be used in this embodiment is a refrigerant including the hydrocarbon refrigerant.

The hydrocarbon refrigerant is preferably a hydrocarbon having 1 or more and 8 or less carbon atoms, more preferably a hydrocarbon having 1 or more and 5 or less carbon atoms, still more preferably a hydrocarbon having 3 or more and 5 or less carbon atoms. A refrigerant having 8 or less carbon atoms is preferred as a refrigerant because the boiling point of the refrigerant does not become excessively high. Examples of the hydrocarbon refrigerant include one or more kinds selected from the group consisting of: methane; ethane; ethylene; propane (R290); cyclopropane; propylene; n-butane; isobutane (R600a); 2-methylbutane; n-pentane; neopentane; cyclopentane; and normal hexane.

The hydrocarbon refrigerants may be used alone or in combination thereof.

(Other Refrigerant)

In this embodiment, the refrigerant may be a mixed refrigerant including any other refrigerant as required in addition to the hydrocarbon refrigerant.

The other refrigerant is, for example, one or more kinds selected from a saturated fluorohydrocarbon refrigerant, an unsaturated fluorohydrocarbon refrigerant, carbon dioxide, and ammonia.

The saturated fluorohydrocarbon refrigerant and the unsaturated fluorohydrocarbon refrigerant are described below.

-Saturated Fluorohydrocarbon Refrigerant-

The saturated fluorohydrocarbon refrigerant is preferably a fluoride of an alkane having 1 to 4 carbon atoms, more preferably a fluoride of an alkane having 1 to 3 carbon atoms, still more preferably a fluoride of an alkane having 1 or 2 carbon atoms (methane or ethane). Examples of the fluoride of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1, 1,2,2-tetrafluoroethane (R134), and 1,1,1,2,2-pentafluoroethane (R125).

Those saturated fluorohydrocarbon refrigerants may be used alone or in combination thereof.

-Unsaturated Fluorohydrocarbon Refrigerant-

The unsaturated fluorohydrocarbon refrigerant is, for example, a compound represented by the following general formula (3):

$$C_xF_yH_z \cdots \qquad (3)$$

wherein
in the general formula (3), "x" represents an integer of from 2 to 6, "y" represents an integer of from 1 to 11, "z" represents an integer of from 1 to 11, and one or more carbon-carbon unsaturated bonds are present in a molecule.

The general formula (3) represents the kinds and numbers of elements in a molecule, and specifically represents an unsaturated fluorohydrocarbon compound in which the number of carbon atoms C is from 2 to 6. The unsaturated fluorohydrocarbon compound having 2 to 6 carbon atoms has physical and chemical properties that a refrigerant is required to have, such as a boiling point, a freezing point, and evaporation latent heat.

In the general formula (3), examples of the bonding mode of the "x" carbon atoms represented by $C_x$ include a carbon-carbon single bond and an unsaturated bond such as a carbon-carbon double bond. The carbon-carbon unsaturated bond is preferably a carbon-carbon double bond in terms of stability. The unsaturated fluorohydrocarbon compound has one or more unsaturated bonds such as a carbon-carbon double bond in a molecule thereof, and the number of the bonds is preferably one. That is, at least one bonding mode of the "x" carbon atoms represented by $C_x$ is more preferably a carbon-carbon double bond.

Preferred examples of the above-mentioned unsaturated fluorohydrocarbon compound may include the fluorides of: a linear or branched chain olefin having 2 to 6 carbon atoms; and a cyclic olefin having 4 to 6 carbon atoms.

Specific examples thereof include: a fluoride of ethylene having introduced thereinto 1 to 3 fluorine atoms; a fluoride of propene having introduced thereinto 1 to 5 fluorine atoms; a fluoride of butene having introduced thereinto 1 to 7 fluorine atoms; a fluoride of pentene having introduced thereinto 1 to 9 fluorine atoms; a fluoride of hexene having introduced thereinto 1 to 11 fluorine atoms; a fluoride of cyclobutene having introduced thereinto 1 to 5 fluorine atoms; a fluoride of cyclopentene having introduced thereinto 1 to 7 fluorine atoms; and a fluoride of cyclohexene having introduced thereinto 1 to 9 fluorine atoms.

Among them, a fluoride of propene is preferred, and propene having introduced thereinto 3 to 5 fluorine atoms is more preferred. Specifically, one or more kinds selected from 1,3,3,3-tetrafluoropropene (R1234ze), 2,3,3,3-tetrafluoropropene (R1234yf), and 1,2,3,3-tetrafluoropropene (R1234ye) are preferred, and 2,3,3,3-tetrafluoropropene (R1234yf) is more preferred.

The unsaturated fluorohydrocarbon refrigerants may be used alone or in combination thereof.

(Content of Hydrocarbon Refrigerant in Refrigerant)

In this embodiment, the refrigerant includes the hydrocarbon refrigerant.

The content of the hydrocarbon refrigerant is preferably from 20 mass% to 100 mass%, more preferably from 30 mass% to 100 mass%, still more preferably from 40 mass% to 100 mass%, still further more preferably from 50 mass% to 100 mass%, yet still further more preferably from 60 mass% to 100 mass%, even more preferably from 70 mass% to 100 mass%, still even more preferably from 80 mass% to 100 mass%, yet still even more preferably from 90 mass% to 100 mass% with respect to the total amount of the refrigerant.

(Usage Amounts of Refrigerant and Refrigerator Oil Composition)

In the mixed composition for a refrigerator of this embodiment, with regard to the usage amounts of the refrigerant and the refrigerator oil composition, the mass ratio [(refrigerator oil composition)/(refrigerant)] of the refrigerator oil composition to the refrigerant is preferably from 30/70 to 90/10. When the mass ratio of the refrigerator oil composition to the refrigerant is set within the range, lubricity and a suitable refrigerating capacity in a refrigerator can be obtained.

[Applications of Refrigerator Oil Composition and Mixed Composition for Refrigerator]

The refrigerator oil composition and mixed composition for a refrigerator of this embodiment are each preferably used in, for example, a refrigeration system, a hot water system, or a heating system. Specific examples thereof include an air conditioner, a cold storage, a freezer, a vending machine, and a showcase. Examples of the air conditioner include: a car air conditioner, such as an open car air conditioner or an electric car air conditioner; and a gas heat pump (GHP) air conditioner.

[One Aspect of the Present Invention to be provided]

According to one aspect of the present invention, there are provided the following items [1] to [8].

[1] A refrigerator oil composition to be used in a refrigerant including a hydrocarbon refrigerant, the refrigerator oil composition including a polyol ester (P) of dipentaerythritol and one or more kinds of fatty acids (A) selected from fatty acids each having 2 to 23 carbon atoms,

wherein the polyol ester (P) satisfies the following requirements ($\alpha$) and ($\beta$):

·Requirement ($\alpha$): the fatty acids (A) satisfy the following formula ($\alpha$1):

$$\sum(Xc\times WXc)+0.259\times\sum(Yc\times WYc)<6{,}000\cdots(\alpha 1)$$

wherein Xc represents the number of carbon atoms of a linear saturated fatty acid in the fatty acids (A),

WXc represents a mass of the linear saturated fatty acid having Xc carbon atoms,
$\Sigma$(Xc$\times$WXc) represents Xc$\times$WXc when the number of kinds of the linear saturated fatty acids in the fatty acids (A) is one, and $\Sigma$(Xc$\times$WXc) represents a total sum of the Xc$\times$WXc of each linear saturated fatty acid when the number of the kinds of the linear saturated fatty acids in the fatty acids (A) is two or more,
Yc represents the number of carbon atoms of a linear unsaturated fatty acid in the fatty acids (A),
WYc represents a mass of the linear unsaturated fatty acid having Yc carbon atoms, and
$\Sigma$(Yc$\times$WYc) represents Yc$\times$WYc when the number of kinds of the linear unsaturated fatty acids in the fatty acids (A) is one, and $\Sigma$(Yc$\times$WYc) represents a total sum of the Yc$\times$WYc of each linear unsaturated fatty acid when the number of the kinds of the linear unsaturated fatty acids in the fatty acids (A) is two or more; and

·Requirement ($\beta$): a content of a branched fatty acid in the fatty acids (A) is less than 80 mass% with respect to a total amount of the fatty acids (A).

[2] The refrigerator oil composition according to the above-mentioned item [1], wherein the fatty acids (A) further satisfy the following requirement ($\gamma$):

·Requirement ($\gamma$): the fatty acids (A) satisfy the following formula ($\gamma$1):

$$\sum(Zc\times WZc)>2{,}500\cdots(\gamma 1)$$

wherein Zc represents the number of carbon atoms of a linear fatty acid in the fatty acids (A),

WZc represents a mass of the linear fatty acid having Zc carbon atoms, and
$\Sigma$(Zc$\times$WZc) represents Zc$\times$WZc when the number of kinds of the linear fatty acids in the fatty acids (A) is one, and $\Sigma$(Zc$\times$WZc) represents a total sum of the Zc$\times$WZc of each linear fatty acid when the number of the kinds of the linear fatty acids in the fatty acids (A) is two or more.

[3] The refrigerator oil composition according to the above-mentioned item [1] or [2], wherein the refrigerator oil composition has a pour point of -20°C or less.
[4] The refrigerator oil composition according to any one of the above-mentioned items [1] to [3], wherein a content of the polyol ester (P) is 20 mass% or more with respect to a total amount of the refrigerator oil composition.
[5] The refrigerator oil composition according to any one of the above-mentioned items [1] to [4], wherein the polyol ester (P) includes a full ester.
[6] The refrigerator oil composition according to any one of the above-mentioned items [1] to [5], wherein the hydrocarbon refrigerant is a hydrocarbon having 1 to 8 carbon atoms.
[7] A mixed composition for a refrigerator, including:

the refrigerator oil composition of any one of the above-mentioned items [1] to [6]; and
a refrigerant including a hydrocarbon refrigerant.

[8] A method of producing a refrigerator oil composition to be used in a refrigerant including a hydrocarbon refrigerant, the method including a step of blending a polyol ester (P) of dipentaerythritol and one or more kinds of fatty acids (A) selected from fatty acids each having 2 to 23 carbon atoms,
wherein the polyol ester (P) satisfies the following requirements ($\alpha$) and ($\beta$):

·Requirement ($\alpha$): the fatty acids (A) satisfy the following formula ($\alpha$1):

$$\sum(Xc\times WXc)+0.259\times\sum(Yc\times WYc)<6{,}000\cdots(\alpha 1)$$

wherein Xc represents the number of carbon atoms of a linear saturated fatty acid in the fatty acids (A),

WXc represents a mass of the linear saturated fatty acid having Xc carbon atoms,
$\Sigma(Xc \times WXc)$ represents $Xc \times WXc$ when the number of kinds of the linear saturated fatty acids in the fatty acids (A) is one, and $\Sigma(Xc \times WXc)$ represents a total sum of the $Xc \times WXc$ of each linear saturated fatty acid when the number of the kinds of the linear saturated fatty acids in the fatty acids (A) is two or more,
Yc represents the number of carbon atoms of a linear unsaturated fatty acid in the fatty acids (A),
WYc represents a mass of the linear unsaturated fatty acid having Yc carbon atoms, and
$\Sigma(Yc \times WYc)$ represents $Yc \times WYc$ when the number of kinds of the linear unsaturated fatty acids in the fatty acids (A) is one, and $\Sigma(Yc \times WYc)$ represents a total sum of the $Yc \times WYc$ of each linear unsaturated fatty acid when the number of the kinds of the linear unsaturated fatty acids in the fatty acids (A) is two or more; and

·Requirement (β): a content of a branched fatty acid in the fatty acids (A) is less than 80 mass% with respect to a total amount of the fatty acids (A).

Examples

The present invention is specifically described by way of Examples below. However, the present invention is not limited to Examples below.

In this Example, the respective components are abbreviated as described below.

Polyol ester: "POE"
Dipentaerythritol: "DPE"
Propionic acid: "C3"
n-Hexanoic acid: "C6"
n-Octanoic acid: "C8"
n-Nonanoic acid: "C9"
n-Decanoic acid: "C10"
Lauric acid: "C12"
Oleic acid: "C18="
3-Methylbutanoic acid: "iC5"
2-Ethylhexanoic acid: "iC8"
2-Hexyldecanoic acid: "iC16"

[Methods of measuring Various Physical Property Values]

The respective properties of the respective raw materials used in Examples and Comparative Examples, and the refrigerator oil compositions of Examples and Comparative Examples were measured in accordance with the following procedures.

(1) Kinematic Viscosity

A kinematic viscosity at 40°C, a kinematic viscosity at 80°C, and a kinematic viscosity at 100°C were measured in conformity with JIS K2283:2000.

(2) Viscosity Index

A viscosity index was calculated in conformity with JIS K2283:2000 on the basis of the results of the measurement of the kinematic viscosities.

[Production Examples 1 to 7, and Comparative Production Examples 1 and 2]

Various POE compounds were synthesized by Production Examples 1 to 7 below, and Comparative Production Examples 1 and 2 below.

<Production Example 1: Synthesis of POE (P1)>

127.1 Grams (0.5 mol) of "DPE", 177.8 g (2.4 mol) of "C3", 206.7 g (1.2 mol) of "C10", 50 g of toluene, and 5 g of *p*-toluenesulfonic acid were loaded into a flask including a Dean-Stark apparatus, and were caused to react with each other at from 180°C to 230°C. At the time point when a predetermined amount of water was produced, the reaction was ended, and the resultant was subjected to alkali washing with a 3% aqueous solution of NaOH, followed by washing with distilled water until the resultant became neutral. Toluene in the resultant oil layer was evaporated. Thus, a POE (P1) was obtained.
A loading ratio between "C3" and "C10" is 4:2 in terms of molar ratio.

<Production Example 2: Synthesis of POE (P2)>

A POE (P2) was obtained under the same conditions as those in Production Example 1 except that 259.6 g (1.8 mol) of "C8" and 259.6 g (1.8 mol) of "iC8" were used instead of "C3" and "C10".
A loading ratio between "C8" and "iC8" is 3:3 in terms of molar ratio.

<Production Example 3: Synthesis of POE (P3)>

A POE (P3) was obtained under the same conditions as those in Production Example 1 except that 339.0 g (1.2 mol) of "C18=", 120.2 g (0.6 mol) of "C12", and 259.6 g (1.8 mol) of "iC8" were used instead of "C3" and "C10".
A loading ratio among "C18=", "C12", and "iC8" is 2:1:3 in terms of molar ratio.

<Production Example 4: Synthesis of POE (P4)>

A POE (P4) was obtained under the same conditions as those in Production Example 1 except that 153.9 g (0.6 mol) of "iC16", 259.6 g (1.8 mol) of "C8", and 173.1 g (1.2 mol) of "iC8" were used instead of "C3" and "C10".
A loading ratio among "iC16", "C8", and "iC8" is 1:3:2 in terms of molar ratio.

<Production Example 5: Synthesis of POE (P5)>

A POE (P5) was obtained under the same conditions as those in Production Example 1 except that 346.1 g (2.4 mol) of "C8" and 122.6 g (1.2 mol) of "iC5" were used instead of "C3" and "C10".
A loading ratio between "C8" and "iC5" is 4:2 in terms of molar ratio.

<Production Example 6: Synthesis of POE (P6)>

A POE (P6) was obtained under the same conditions as those in Production Example 1 except that 169.5 g (0.6 mol) of "C18=", 173.1 g (1.2 mol) of "C8", and 259.6 g (1.8 mol) of "iC8" were used instead of "C3" and "C10".
A loading ratio among "C18=", "C8", and "iC8" is 1:2:3 in terms of molar ratio.

<Production Example 7: Synthesis of POE (P7)>

A POE (P7) was obtained under the same conditions as those in Production Example 1 except that 169.5 g (0.6 mol) of "C18=" and 348.4 g (3 mol) of "C6" were used instead of "C3" and "C10".
A loading ratio between "C18=" and "C6" is 1:5 in terms of molar ratio.

<Comparative Production Example 1: Synthesis of POE (P'1)>

A POE (P'1) was obtained under the same conditions as those in Production Example 1 except that 209.0 g (1.8 mol) of "C6" and 284.8 g (1.8 mol) of "C9" were used instead of "C3" and "C10".
A loading ratio between "C6" and "C9" is 3:3 in terms of molar ratio.

<Comparative Production Example 2: Synthesis of POE (P'2)>

A POE (P'2) was obtained under the same conditions as those in Production Example 1 except that 519.2 g (3.6 mol) of "iC8" was used instead of "C3" and "C10".

[Examples A1 to A7, and Comparative Examples A1 and A2]

In Examples A1 to A7, and Comparative Examples A1 and A2, the following compounds were used as refrigerator oil compositions, and were subjected to measurement to be described later. In addition, fatty acids for forming the following compounds were each examined for its satisfiability of each of the requirement ($\alpha$) and the requirement ($\beta$):

·Example A1: the POE (P1) obtained in Production Example 1;
·Example A2: the POE (P2) obtained in Production Example 2;
·Example A3: the POE (P3) obtained in Production Example 3;
·Example A4: the POE (P4) obtained in Production Example 4;
·Example A5: the POE (P5) obtained in Production Example 5;
·Example A6: the POE (P6) obtained in Production Example 6;
·Example A7: the POE (P7) obtained in Production Example 7;
·Comparative Example A1: the POE (P'1) obtained in Comparative Production Example 1; and
·Comparative Example A2: the POE (P'2) obtained in Comparative Production Example 2.

<Measurement of Solubility>

Predetermined amounts of each of the refrigerator oil compositions and R290 serving as a refrigerant were sealed in a sapphire glass-made pressure-resistant vessel, and a temperature in the pressure-resistant vessel was increased from room temperature (23°C) to 80°C. A temperature/pressure/solubility curve was produced by calculation from the volume of the refrigerator oil composition having dissolved therein R290 and a pressure in the vessel at the time. The solubility (mass%) of R290 in the refrigerator oil composition at 80°C and 2.0 MPa was calculated from the produced solubility curve.

<Measurement of Pour Point>

A pour point was measured in conformity with JIS K2269:1987.
The results are shown in Table 1.
In Table 1, with regard to the satisfiability of each of the requirement ($\alpha$) and the requirement ($\beta$), a fatty acid that satisfied the requirement was represented by "S", and a fatty acid that did not satisfy the requirement was represented by "N".

[Table 1]

Table 1

| | | | Unit | Example A1 | Example A2 | Example A3 | Example A4 |
|---|---|---|---|---|---|---|---|
| Base oil | | | - | POE (P1) | POE (P2) | POE (P3) | POE (P4) |
| Configuration of fatty acid (A) * represented as the number of moles with respect to 1 mole of DPE | | | - | "C3"/"C10" =4/2 | "C8"/"iC8" =3/3 | "C18="/"C12"/"iC8" =2/1/3 | "iC16"/"C8"/"iC8" =1/3/2 |
| Various physical property values | Kinematic viscosity | 40°C | $mm^2/s$ | 64.35 | 80.14 | 108.80 | 88.72 |
| | Kinematic viscosity | 80°C | $mm^2/s$ | 15.07 | 17.93 | 25.49 | 20.14 |
| | Kinematic viscosity | 100°C | $mm^2/s$ | 9.08 | 10.63 | 15.17 | 11.95 |
| | Viscosity index | | - | 118 | 119 | 146 | 127 |
| Parameter | Requirement ($\alpha$) | | | 4,334 | 3,461 | 5,038 | 3,461 |
| | Satisfaction of requirement ($\alpha$) | | | S | S | S | s |
| | Requirement ($\beta$) | | | 0.0 | 50.0 | 36.1 | 55.7 |
| | Satisfaction of requirement ($\beta$) | | | S | S | S | S |
| Evaluation result | Solubility | | mass% | 12.3 | 13.3 | 14.7 | 15.4 |
| | Pour point | | °C | -30 | -50 | -22.5 | -50 |

Table 1 (continued)

| | | | Unit | Example A5 | Example A6 | Example A7 | Comparative Example A1 | Comparative Example A2 |
|---|---|---|---|---|---|---|---|---|
| Base oil | | | - | POE (P5) | POE (P6) | POE (P7) | POE (P'1) | POE (P'2) |
| Configuration of fatty acid (A) * represented as the number of moles with respect to 1 mole of DPE | | | - | "C8"/"iC5" =4/2 | "C18="/"C8 "/"iC8" =1/2/3 | "C18="/"C6" =1/5 | "C6"/"C9" =3/3 | "iC8" =6 |
| Various physical property values | Kinematic viscosity | 40°C | $mm^2/s$ | 71.51 | 94.92 | 61.18 | 67.88 | 128.1 |
| | Kinematic viscosity | 80°C | $mm^2/s$ | 16.83 | 21.93 | 16.62 | 16.87 | 24.32 |
| | Kinematic viscosity | 100°C | $mm^2/s$ | 10.13 | 13.05 | 10.41 | 10.31 | 13.69 |
| | Viscosity index | | - | 125 | 136 | 160 | 138 | 103 |
| Parameter | Requirement ($\alpha$) | | | 4,615 | 3,624 | 4,801 | 6,363 | 0 |
| | Satisfaction of requirement ($\alpha$) | | | S | s | s | N | s |
| | Requirement ($\beta$) | | | 26.2 | 43.1 | 0.0 | 0.0 | 100.0 |
| | Satisfaction of requirement ($\beta$) | | | S | S | s | s | N |
| Evaluation result | Solubility | | mass% | 14.1 | 13.9 | 12.2 | 12.2 | 17.0 |
| | Pour point | | °C | -22.5 | -52.5 | -32.5 | -17.5 | -42.5 |

The following is found from Table 1.

It is found that each of Examples A1 to A7 each satisfying both of the requirement ($\alpha$) and the requirement ($\beta$) is excellent in solubility of the hydrocarbon refrigerant, and has a low pour point.

In contrast, it is found that Comparative Example A1 that does not satisfy the requirement ($\alpha$) has a high pour point, and hence cannot sufficiently secure low-temperature fluidity.

In addition, it is found that Comparative Example A2 that does not satisfy the requirement ($\beta$) has a high solubility of the hydrocarbon refrigerant, and hence cannot be suppressed in solubility of the hydrocarbon refrigerant to a low level.

[Examples B1 to B7, and Comparative Examples B1 and B2]

In Examples B1 to B7, and Comparative Examples B1 and B2, the same compounds as those in Examples A1 to A7, and Comparative Examples A1 and A2 were used as refrigerator oil compositions, and were subjected to measurement to be described later. In addition, fatty acids for forming the following compounds were each examined for its satisfiability of the requirement ($\gamma$).

<Measurement of Dissolution Viscosity>

The dissolution viscosities of the refrigerator oil compositions each having dissolved therein a refrigerant were measured with a viscosity-measuring apparatus 1 illustrated in each of Fig. 1 to Fig. 3.

First, a predetermined amount of a refrigerator oil composition 2 and a capillary viscometer 20 were loaded into a vessel 10 formed of a sapphire glass tube, and then a lid 11 was closed. Next, a T-shaped joint 24 was mounted with a safety valve 26 and a needle valve 25, and then the vessel 10 was immersed in a thermostat 3 containing a heating medium 4. The temperature of the heating medium 4 was held at 80°C by temperature-regulating means 5.

Next, the needle valve 25 and a refrigerant-collecting line (not shown) were connected to each other through a pressure-resistant hose 27, and a vacuum pump (not shown) was actuated to deaerate the insides of the vessel 10 and the refrigerant-collecting line to about 13.3 Pa. After the deaeration, the vacuum pump was stopped, and the master valve of a refrigerant vessel was opened to introduce the refrigerant (R290) into the vessel 10. The refrigerant was introduced so that a pressure in the vessel 10 became 2.0 MPa.

After the introduction of the refrigerant, the needle valve 25 was closed, and the valve of the refrigerant vessel was closed, followed by the detachment of the pressure-resistant hose 27. After that, the sealed vessel 10 was placed at a

predetermined position in the thermostat 3 in which a permanent magnet 14 had been lowered to a position A. When the entirety of the vessel 10 was brought into a thermal equilibrium state, driving means for moving the permanent magnet 14 was activated to move the permanent magnet 14, to thereby raise the capillary viscometer 20 to a position B. Thus, as illustrated in Fig. 3, the refrigerator oil composition 2 having dissolved therein the refrigerant is dropped from the capillary viscometer 20, and hence the liquid surface of the refrigerator oil composition 2 having dissolved therein the refrigerant lowers. Then, optical fibers 15 (15A, 15B, 15C, and 15D) were caused to sense that the liquid surface of the refrigerator oil composition 2 having dissolved therein the refrigerant had passed through a bench mark 21B and a bench mark 21A, and a viscosity calculator was caused to automatically measure a time period required for the refrigerator oil composition 2 having dissolved therein the refrigerant to pass through the inside of a capillary portion 22, and was caused to automatically measure the viscosity of the composition. Thus, the dissolution viscosity thereof was measured. The dissolution viscosity was measured after it had been recognized that the refrigerant and the refrigerator oil composition had not been separated from each other.

In each of Fig. 1 to Fig. 3, reference symbol 6 represents a gas with which the inside of the vessel 10 is filled. Reference symbol 14A represents an arm that holds the permanent magnet 14. Reference symbol 21 represents a liquid reservoir portion. Reference symbol 23 represents a belt-shaped outer ring portion formed of a magnetic material, the portion being fixed to the outer peripheral surface of the side wall of the capillary portion 22.

The results are shown in Table 2.

In Table 2, with regard to the satisfiability of the requirement (γ), a fatty acid that satisfied the requirement was represented by "S", and a fatty acid that did not satisfy the requirement was represented by "N".

[Table 2]

Table 2

| | | | Unit | Example B1 | Example B2 | Example B3 | Example B4 |
|---|---|---|---|---|---|---|---|
| Base oil | | | - | POE (P1) | POE (P2) | POE (P3) | POE (P4) |
| Configuration of fatty acid (A) * represented as the number of moles with respect to 1 mole of DPE | | | - | "C3"/"C10" =4/2 | "C8"/"iC8" =3/3 | "C18="/"C12" /"iC8" =2/1/3 | "iC16"/"C8"/"iC8" =1/3/2 |
| Various physical property values | Kinematic viscosity | 40°C | $mm^2/s$ | 64.35 | 80.14 | 108.80 | 88.72 |
| | Kinematic viscosity | 80°C | $mm^2/s$ | 15.07 | 17.93 | 25.49 | 20.14 |
| | Kinematic viscosity | 100°C | $mm^2/s$ | 9.08 | 10.63 | 15.17 | 11.95 |
| | Viscosity index | | - | 118 | 118 | 119 | 146 |
| Parameter | Requirement (γ) | | | 4,334 | 3,461 | 4,334 | 3,461 |
| | Satisfaction of requirement (γ) | | | S | S | S | S |
| Evaluation result | Dissolution viscosity | | $mm^2/s$ | 3.549 | 3.332 | 4.297 | 3.097 |

Table 2 (continued)

| | Unit | Example B5 | Example B6 | Example B7 |
|---|---|---|---|---|
| Base oil | - | POE (P5) | POE (P6) | POE (P7) |
| Configuration of fatty acid (A) * represented as the number of moles with respect to 1 mole of DPE | - | "C8"/"iC5" =4/2 | "C18="/"C8"/ "iC8" =1/2/3 | "C18="/"C6" =1/5 |

(continued)

| | | | Unit | Example B5 | Example B6 | Example B7 |
|---|---|---|---|---|---|---|
| Various physical property values | Kinematic viscosity | 88.72 | 94.92 | 71.51 | 94.92 | 61.18 |
| | Kinematic viscosity | 20.14 | 21.93 | 16.83 | 21.93 | 16.62 |
| | Kinematic viscosity | 11.95 | 13.05 | 10.13 | 13.05 | 10.41 |
| | Viscosity index | | 127 | 136 | 125 | 136 |
| Parameter | Requirement ($\gamma$) | | | 4,615 | 7,392 | 4,615 |
| | Satisfaction of requirement ($\gamma$) | | | S | S | S |
| Evaluation result | Dissolution viscosity | | 3.097 | 3.032 | 3.784 | 4.349 |

Table 2 (continued)

| | | | Unit | Comparative Example B1 | Comparative Example B2 |
|---|---|---|---|---|---|
| Base oil | | | - | POE (P'1) | POE (P'2) |
| Configuration of fatty acid (A) * represented as the number of moles with respect to 1 mole of DPE | | | - | "C6"/"C9" =3/3 | "iC8" =6 |
| Various physical property values | Kinematic viscosity | 67.88 | 128.1 | 67.88 | 128.1 |
| | Kinematic viscosity | 16.87 | 24.32 | 16.87 | 24.32 |
| | Kinematic viscosity | 10.31 | 13.69 | 10.31 | 13.69 |
| | Viscosity index | | 138 | 103 | 138 |
| Parameter | Requirement ($\gamma$) | | | 6,363 | 0 |
| | Satisfaction of requirement ($\gamma$) | | | s | N |
| Evaluation result | Dissolution viscosity | | 3.979 | 3.979 | 2.484 |

The following is found from Table 2.

It is found that each of Examples B1 to B7 satisfying the requirement ($\gamma$) has a high dissolution viscosity, and is hence suppressed in viscosity reduction due to the dissolution of the hydrocarbon refrigerant.

In contrast, it is found that Comparative Example B2 that does not satisfy the requirement ($\gamma$) has a low dissolution viscosity, and is hence not suppressed in viscosity reduction due to the dissolution of the hydrocarbon refrigerant.

## Claims

**1.** A refrigerator oil composition to be used in a refrigerant including a hydrocarbon refrigerant, the refrigerator oil composition comprising a polyol ester (P) of dipentaerythritol and one or more kinds of fatty acids (A) selected from fatty acids each having 2 to 23 carbon atoms,
wherein the polyol ester (P) satisfies the following requirements ($\alpha$) and ($\beta$):

·Requirement ($\alpha$): the fatty acids (A) satisfy the following formula ($\alpha$1):

$$\sum(Xc\times WXc)+0.259\times\sum(Yc\times WYc)<6{,}000\cdots(\alpha 1)$$

wherein Xc represents the number of carbon atoms of a linear saturated fatty acid in the fatty acids (A),

WXc represents a mass of the linear saturated fatty acid having Xc carbon atoms,
$\sum(Xc \times WXc)$ represents $Xc \times WXc$ when the number of kinds of the linear saturated fatty acids in the fatty acids (A) is one, and $\sum(Xc \times WXc)$ represents a total sum of the $Xc \times WXc$ of each linear saturated fatty acid when the number of the kinds of the linear saturated fatty acids in the fatty acids (A) is two or more,
Yc represents the number of carbon atoms of a linear unsaturated fatty acid in the fatty acids (A),
WYc represents a mass of the linear unsaturated fatty acid having Yc carbon atoms, and
$\Sigma(Yc \times WYc)$ represents $Yc \times WYc$ when the number of kinds of the linear unsaturated fatty acids in the fatty acids (A) is one, and $\Sigma(Yc \times WYc)$ represents a total sum of the $Yc \times WYc$ of each linear unsaturated fatty acid when the number of the kinds of the linear unsaturated fatty acids in the fatty acids (A) is two or more; and

·Requirement (β): a content of a branched fatty acid in the fatty acids (A) is less than 80 mass% with respect to a total amount of the fatty acids (A).

**2.** The refrigerator oil composition according to claim 1, wherein the fatty acids (A) further satisfy the following requirement (γ):

·Requirement (γ): the fatty acids (A) satisfy the following formula (γ1):

$$\sum(Zc \times WZc) > 2{,}500 \cdots (\gamma 1)$$

wherein Zc represents the number of carbon atoms of a linear fatty acid in the fatty acids (A),

WZc represents a mass of the linear fatty acid having Zc carbon atoms, and
$\Sigma(Zc \times WZc)$ represents $Zc \times WZc$ when the number of kinds of the linear fatty acids in the fatty acids (A) is one, and $\Sigma(Zc \times WZc)$ represents a total sum of the $Zc \times WZc$ of each linear fatty acid when the number of the kinds of the linear fatty acids in the fatty acids (A) is two or more.

**3.** The refrigerator oil composition according to claim 1 or 2, wherein the refrigerator oil composition has a pour point of -20°C or less.

**4.** The refrigerator oil composition according to any one of claims 1 to 3, wherein a content of the polyol ester (P) is 20 mass% or more with respect to a total amount of the refrigerator oil composition.

**5.** The refrigerator oil composition according to any one of claims 1 to 4, wherein the polyol ester (P) includes a full ester.

**6.** The refrigerator oil composition according to any one of claims 1 to 5, wherein the hydrocarbon refrigerant is a hydrocarbon having 1 to 8 carbon atoms.

**7.** A mixed composition for a refrigerator, comprising:

the refrigerator oil composition of any one of claims 1 to 6; and
a refrigerant including a hydrocarbon refrigerant.

**8.** A method of producing a refrigerator oil composition to be used in a refrigerant including a hydrocarbon refrigerant, the method comprising a step of blending a polyol ester (P) of dipentaerythritol and one or more kinds of fatty acids (A) selected from fatty acids each having 2 to 23 carbon atoms,
wherein the polyol ester (P) satisfies the following requirements (α) and (β):

·Requirement (α): the fatty acids (A) satisfy the following formula (α1):

$$\sum(Xc \times WXc) + 0.259 \times \sum(Yc \times WYc) < 6{,}000 \cdots (\alpha 1)$$

wherein Xc represents the number of carbon atoms of a linear saturated fatty acid in the fatty acids (A),

WXc represents a mass of the linear saturated fatty acid having Xc carbon atoms,
$\sum(Xc \times WXc)$ represents $Xc \times WXc$ when the number of kinds of the linear saturated fatty acids in the fatty

acids (A) is one, and $\Sigma(Xc \times WXc)$ represents a total sum of the $Xc \times WXc$ of each linear saturated fatty acid when the number of the kinds of the linear saturated fatty acids in the fatty acids (A) is two or more,
Yc represents the number of carbon atoms of a linear unsaturated fatty acid in the fatty acids (A),
WYc represents a mass of the linear unsaturated fatty acid having Yc carbon atoms, and
$\Sigma(Yc \times WYc)$ represents $Yc \times WYc$ when the number of kinds of the linear unsaturated fatty acids in the fatty acids (A) is one, and $\Sigma(Yc \times WYc)$ represents a total sum of the $Yc \times WYc$ of each linear unsaturated fatty acid when the number of the kinds of the linear unsaturated fatty acids in the fatty acids (A) is two or more; and

·Requirement (β): a content of a branched fatty acid in the fatty acids (A) is less than 80 mass% with respect to a total amount of the fatty acids (A).

[FIG. 1]

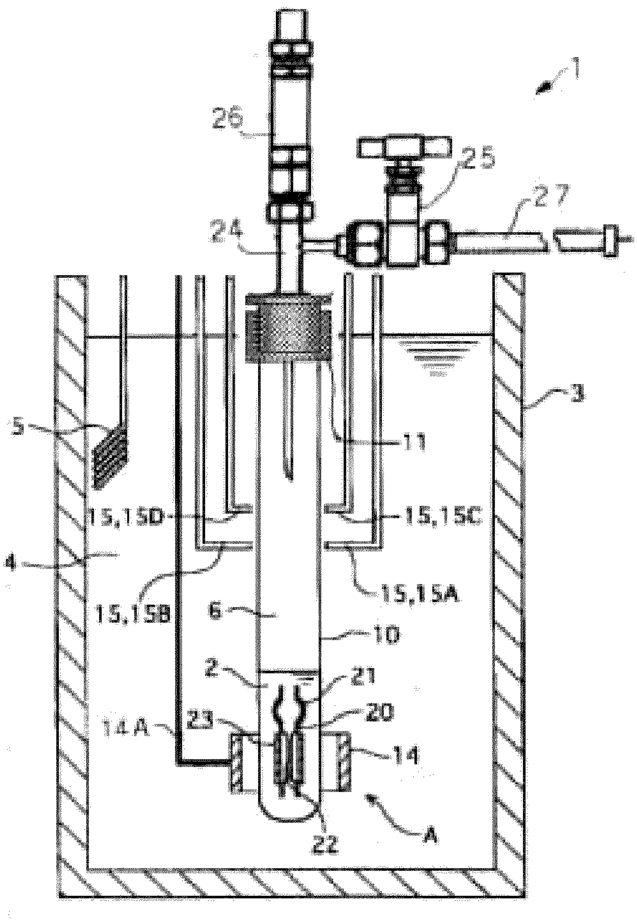
1
26
25
27
24
3
5
11
15,15D
15,15C
4
15,15B
15,15A
6
10
2
21
20
23
14A
14
22
A

FIG.1

[FIG. 2]

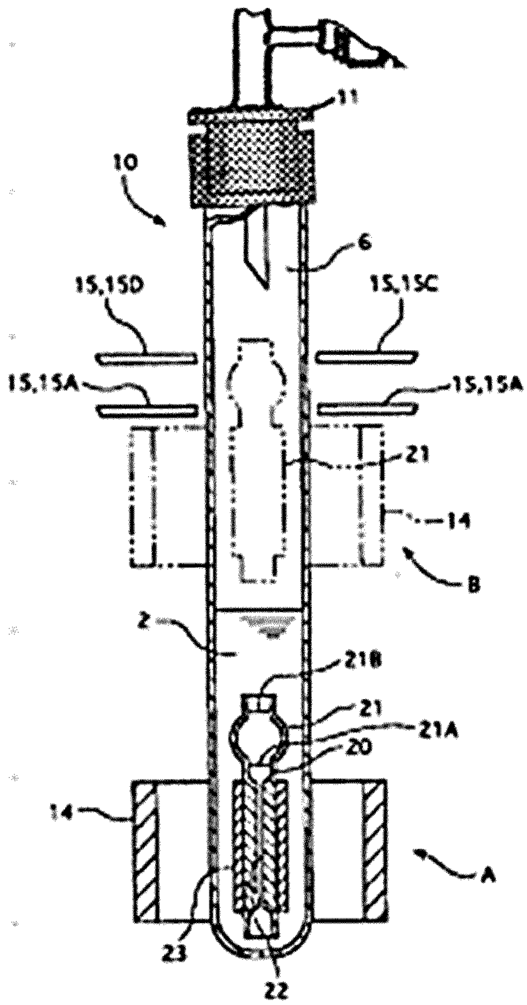


FIG. 2

[FIG. 3]

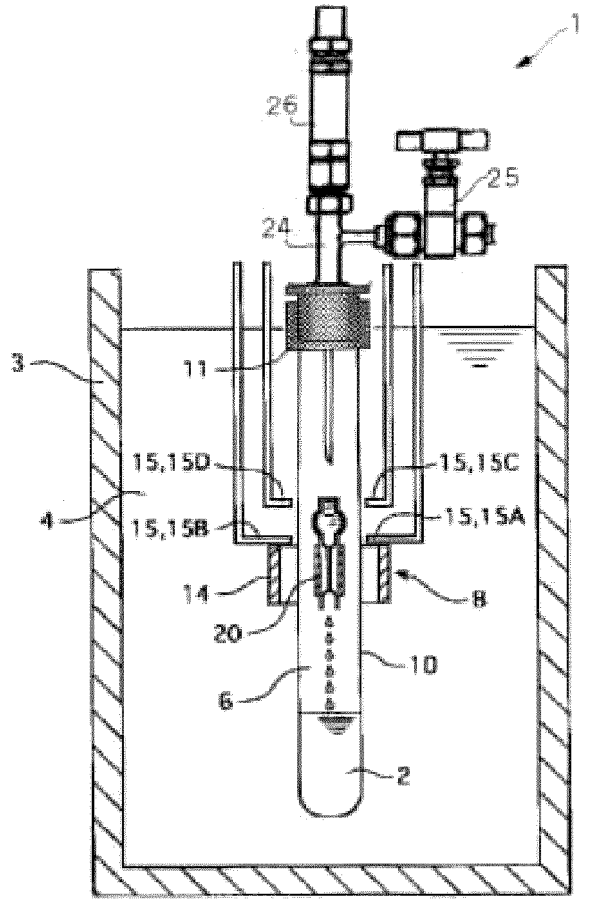


FIG. 3

**INTERNATIONAL SEARCH REPORT**

International application No. **PCT/JP2023/038629**

**A. CLASSIFICATION OF SUBJECT MATTER**

***C10M 105/38***(2006.01)i; ***C09K 5/04***(2006.01)i; *C10N 30/00*(2006.01)n; *C10N 30/08*(2006.01)n; *C10N 40/30*(2006.01)n
FI: C10M105/38; C09K5/04 B; C10N40:30; C10N30:08; C10N30:00 A

According to International Patent Classification (IPC) or to both national classification and IPC

**B. FIELDS SEARCHED**

Minimum documentation searched (classification system followed by classification symbols)

C10M; C10N; C09K5/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| X | JP 2014-114396 A (JAPAN SUN OIL CO LTD) 26 June 2014 (2014-06-26) claims, examples, in particular, synthesis oil 11, comparative oil 3-4, 7 | 1-8 |
| X | WO 2016/002523 A1 (JX NIPPON OIL & ENERGY CORPORATION) 07 January 2016 (2016-01-07) examples, in particular, base oil b-2, test oil 12, 17, 24, 29 | 1-8 |
| X | WO 2014/017596 A1 (JX NIPPON OIL & ENERGY CORPORATION) 30 January 2014 (2014-01-30) examples, in particular, base oil b-2, comparative oil 17 | 1-8 |
| A | JP 2010-168436 A (HITACHI APPLIANCES INC) 05 August 2010 (2010-08-05) claims, examples | 1-8 |
| A | TW 201333183 A (JX NIPPON OIL & ENERGY CORPORATION) 16 August 2013 (2013-08-16) examples, in particular, base oil, example 20 | 1-8 |
| A | CN 104725222 A (HUANG, Xiaoping) 24 June 2015 (2015-06-24) claims, examples | 1-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/038629**

**C. DOCUMENTS CONSIDERED TO BE RELEVANT**

| Category* | Citation of document, with indication, where appropriate, of the relevant passages | Relevant to claim No. |
|---|---|---|
| P, X | CN 115851353 A (SHUNDEFUYANSHENG LUBRICANT CO., LTD.) 28 March 2023 (2023-03-28)<br>examples, in particular, base oil A-3, B-1, examples 1-5 | 1-8 |

Form PCT/ISA/210 (second sheet) (January 2015)

**INTERNATIONAL SEARCH REPORT**
**Information on patent family members**

International application No.
**PCT/JP2023/038629**

| Patent document cited in search report | Publication date (day/month/year) | Patent family member(s) | Publication date (day/month/year) |
|---|---|---|---|
| JP 2014-114396 A | 26 June 2014 | US 2014/0374647 A1 claims, examples | |
| | | WO 2013/100100 A1 | |
| | | EP 2799527 A1 | |
| | | TW 201333177 A | |
| | | AU 2012361491 A | |
| | | CN 104039939 A | |
| | | KR 10-2014-0108241 A | |
| | | CN 108531239 A | |
| | | CN 108587725 A | |
| | | DK 2799527 T | |
| | | ES 2910438 T | |
| WO 2016/002523 A1 | 07 January 2016 | JP 2020-158786 A | |
| | | TW 201606070 A | |
| WO 2014/017596 A1 | 30 January 2014 | US 2015/0184103 A1 examples | |
| | | EP 2878652 A1 | |
| | | CN 104508094 A | |
| | | KR 10-2015-0036234 A | |
| | | BR 112015001508 A | |
| | | IN 658DEN2015 A | |
| | | KR 10-2020-0038558 A | |
| | | TW 201408765 A | |
| JP 2010-168436 A | 05 August 2010 | (Family: none) | |
| TW 201333183 A | 16 August 2013 | (Family: none) | |
| CN 104725222 A | 24 June 2015 | (Family: none) | |
| CN 115851353 A | 28 March 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004043611 A